# EUROPÄISCHE PATENTSCHRIFT

(11) **EP 0 367 319 B1**
(45) Veröffentlichungstag und Bekanntmachung des Hinweises auf die Patenterteilung: **18.11.1993**
(21) Anmeldenummer: 89202485.2
(22) Anmeldetag: 03.10.1989
(51) Int. Cl.: B60R 21/20

(54) **Gassack-Aufprallschutzvorrichtung**
Air crash protection device
Dispositif de protection par sac d'air en cas d'accident

(30) Priorität: 01.11.1988 DE 3837085
(43) Veröffentlichungstag der Anmeldung: 09.05.1990
(73) Patentinhaber: KOLBENSCHMIDT Aktiengesellschaft, D-74150 Neckarsulm (DE)
(72) Erfinder: Kreuzer, Martin, D-8751 Kleinwallstadt (DE)
(74) Vertreter: Rieger, Harald, Dr.

(56) Entgegenhaltungen:
- EP-A- 0 357 356
- GB-A- 2 192 841
- US-A- 4 148 503
- PATENT ABSTRACTS OF JAPAN, Band 12, Nr. 549 (M-770)[3306], 2. Dezember 1988;
- & JP-A-63 184 548 (TOYODA GOSEI CO., LTD) 30-07-1988

## Beschreibung

Die Erfindung betrifft eine Gassack-Aufprallschutzvorrichtung, die in das Lenkrad bzw. Armaturenbrett von Kraftfahrzeugen integrierbar ist und aus dem den zusammengefalteten aufblähbaren Gassack sowie den mit diesem verbundenen Festtreibstoff-Gasgenerator aufnehmenden Träger und der über den Rand des Gassacks reichenden mit dem Träger verbundenen Abdeckung aus elastischem Kunststoff besteht, deren Deckel genau definierte Sollbruchlinien aufweist und deren an dem Träger befestigter umlaufender Rahmen mit den durch die Sollbruchlinien gebildeten Deckelabschnitten scharnierartig verbunden ist, und die Abdeckung aus einem einteiligen Spritzgußformkörper aus thermoplastischem Elastomerem besteht.

Eine solche gattungsgemäße Gassack-Aufprallschutzvorrichtung ist in der US-A-4 148 503 beschrieben, wobei in nachteiliger Weise die Deckelabschnitte von dem Rahmen durch den sich aufblähenden Gassack abgerissen werden können.

Eine Gassack-Aufprallschutzvorrichtung besitzt als tragendes Element einen Generatorträger, der neben dem Festtreibstoff-Gasgenerator noch den zusammengefalteten aufblähbaren Gassack und dessen Arretierungsblech (Flanschblech) aufzunehmen hat. Eine rund um den Träger verlaufende Klammerleiste hält die Abdeckung des Gassacks aus Polyurethan-Integralschaum fest. Lenkwellenseitig sind der Gasgenerator und dessen Sicherungsblech gegen den Träger geschraubt und unlösbar vernietet. Die Abdeckung, in der Regel aus Polyurethan bestehend, reißt beim Aufprall unter dem Druck des sich aufblähenden Gassacks entlang genau definierter Sollbruchlinien auf, entlang denen die Wanddicke der Abdeckung, die i.a. 3,0 bis 6,0 mm beträgt, auf 0,25 bis 0,75 mm verringert ist.

Um ein Ablösen und Zerreißen der Deckelabschnitte oder das Lösen von kleinsten Teilchen beim Aufblähen des Gassacks unter allen Temperaturen unbedingt zu verhindern, ist die Abdeckung durch spezielle Einlegeteile armiert. Als Armierung dient z.B. ein hochfestes in sich geschlossenes Gurtband, beispielsweise aus Aramid- oder Polyamid-Gewebe, das im Übergangsbereich vom Deckel zum Rahmen der Abdeckung in den elastischen Kunststoff eingelagert ist (DE-A-29 05 618).

Nach der DE-A-31 16 538 kann die Armierung auch aus einem kappenartig gewölbten, im wesentlichen flächigen Spritzguß-Formkörper aus Kunststoff bestehen und sich über die gesamte Deckelfläche - mit Ausnahme der Sollbruchlinien - bis in den Bereich des Rahmens der Abdeckung erstrecken. Durch die vergleichsweise geringe Steifigkeit der Gewebearmierung ergeben sich Fertigungsprobleme bei der Herstellung der Abdeckung; denn die Gewebearmierung muß von Hand in die Gießform eingelegt und an mehreren Punkten fixiert werden, um ihre genaue Lage in der Abdeckung zu gewährleisten. Trotz dieser Fixierung geschieht es des öfteren, daß die Gewebearmierung durch den in die Gießform einströmenden Kunststoff aus ihrer Verankerung gelöst wird und dann an die Oberfläche aufschwimmt. Die Nachteile einer Armierung aus einem aus Kunststoff bestehenden Spritzguß-Formkörper sind darin zu sehen, daß es bisher nicht gelungen ist, bei diesen sowohl die erforderliche Elastizität als auch die im Hinblick auf die speziellen Belastungen notwendige Umfangssteifigkeit zu gewährleisten.

Um diesen Mängeln abzuhelfen, ist in der DE-U-87 13 154 eine Abdeckung vorgesehen, bei der die Verstärkung der Deckelabschnitte durch ein Metallblech gebildet ist, das aus dem äußeren Randbereich jedes Deckelabschnitts heraustritt und in laschenartigen Befestigungsteilen in dem Rahmen der Abdeckung endet. Durch eine solche Armierung kann der aufblähende Gassack durch aus der Kunststoff-Abdeckung austretende Blechkanten der Armierung beschädigt werden. Darüber hinaus besteht die Gefahr, daß durch kräftiges Betätigen des Signalknopfs für die Hupe die Armierung und damit die Abdeckung bleibend verformt werden.

Aus der DE-A-37 07 370 ist ferner eine Abdeckung bekannt, deren Armierung der Deckelabschnitte aus einer Blech-Kunststoff-Kombination besteht. Dabei sind an dem lenkradseitigen Rand des aus Blech gebildeten mit dem Träger verbundenen Rahmens der Abdeckung sich in den scharnierseitigen Randbereich eines jeden Deckelabschnitts erstreckende Blechabschnitte vorhanden. Mit jedem Blechabschnitt ist eine aus hartem Kunststoff bestehende über den Deckelabschnitt verlaufende Armierung fest verbunden. Bei dieser Abdeckung werden die beim Aufblähen des Gassacks auftretenden Umfangskräfte von der Blecharmierung und die Beschleunigungskräfte der Deckelabschnitte von der angespritzten Kunststoffschicht aufgenommen. Der Nachteil dieser Blech-Kunststoff-Kombination liegt im wesentlichen darin, daß diese Armierung in einem besonderen Arbeitsgang in die Abdeckung eingeschäumt werden muß.

In der EP-A-0 357 356, die als Stand der Technik gemäß Art. 54(3) EPÜ gilt, ist ein hinter dem Armaturenbrett angeordneter Beifahrer-Airbag beschrieben. Der Hohlraum, in dem der Airbag untergebracht ist, ist durch zwei am oberen bzw. am unteren Rand des Armaturenbretts scharnierartig befestigte mit einem thermoplastischen Polymer beschichtete Deckelabschnitte, die entlang einer horizontalen Sollbruchlinie aufreißen und dann die Austrittsöffnung für den Airbag freigeben, verschlossen.

Es ist die Aufgabe der vorliegenden Erfindung, eine Abdeckung für die eingangs beschriebene Gassack-Aufprallschutzvorrichtung zu schaffen, bei der das Abreißen der Deckelabschnitte vom Rahmen unterbleibt.

Gelöst ist diese Aufgabe dadurch, daß von der Initialbruchstelle ausgehend die Wanddicke der Abdeckung entlang der Sollbruchlinien kontinuierlich bis zum Auslauf der Sollbruchlinien im Bereich der scharnierartigen Verbindung der Deckelabschnitte mit dem Rahmen zunimmt und die Wanddicke der Abdeckung entlang der Sollbruchlinien in der Weise gestaltet ist, daß im Bereich der freien Ecken der Deckelabschnitte die Wanddicke 0,90 bis 1,20 mm und an ihrem Auslauf im Bereich der scharnierartigen Verbindung der Deckelabschnitte mit dem Rahmen der Abdeckung 1,3 bis 2,3 mm beträgt.

Im Rahmen der vorzugsweisen Ausgestaltung weisen die Sollbruchlinien eine Initialbruchstelle von 5 bis 30 mm Länge und einer Wanddicke der Abdeckung von 0,30 bis 0,75 mm auf.

Die Deckelabschnitte der Abdeckung besitzen zweckmäßigerweise eine Wanddicke von mindestens 2,5 bis 6,0 mm.

Um eine optimale Funktion zu gewährleisten, besitzen die Deckelabschnitte im Bereich ihrer scharnierartig ausgebildeten Verbindung mit dem Rahmen der Abdeckung eine Zerreißfestigkeit von wenigstens 4500 N.

Vorzugsweise kommt für die Herstellung der Abdeckung thermoplastisches Elastomeres in Betracht, das eine Härte von 55 Shore A bis 75 Shore D nach DIN 53505, eine Bruchspannung von größer 5,5 MPa nach DIN 53504, eine Bruchdehnung von größer 100 % nach DIN 53504 und eine Temperaturbeständigkeit von -40 bis +85°C besitzt.

Um die thermoplastische Abdeckung mit dem Träger fest verbinden zu können, sind nach einem weiteren Merkmal der Erfindung am lenksäulenseitigen Rand des Rahmens Befestigungslaschen aus dem gleichen Werkstoff wie die Abdeckung angespritzt.

Es besteht auch die Möglichkeit, in den Rahmen der Abdeckung mit dem Träger verbindbare Laschenbleche miteinzuspritzen.

Die erfindungsgemäße Abdeckung ist in der Zeichnung beispielhaft dargestellt und wird nachfolgend näher erläutert.

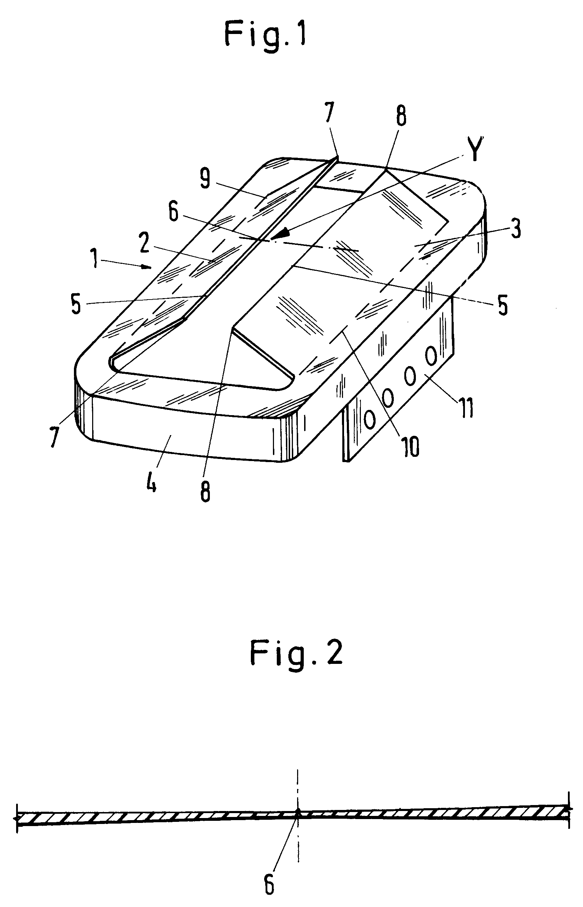

Fig. 1 zeigt eine isometrische Darstellung einer aus einem einteiligen Spritzgußformkörper bestehenden Abdeckung (1) aus thermoplastischem Elastomerem. Die Abdeckung (1) besteht aus den beiden in sich öffnender Position dargestellten Deckelteilen (2, 3), die durch den nicht wiedergegebenen sich aufblähenden Gassack aufgerissen sind und nach außen gebogen werden. Die Deckelteile (2, 3) sind scharnierartig einteilig mit dem Rahmen (4) der Abdeckung (1) verbunden. Entlang der Sollbruchlinien (5) sind die Deckelteile (2, 3) aufgerissen, wobei der Ausschnitt "Y" gemäß Fig. 2 in vergrößerter Form die Initial-Sollbruchstelle (6) von 0,5 mm Wanddicke und 10 mm Länge zeigt, von wo aus die Wanddicke zu den freien Ecken (7, 8) der Deckelabschnitte (2, 3) hin kontinuierlich auf eine Wanddicke von 1 mm zunimmt. Im Scharnierbereich (9, 10) der Deckelteile (2, 3) mit dem Rahmen (4) beträgt die Wanddicke der Abdeckung (1) 6 mm. Am lenksäulenseitigen Rand des Rahmens (4) sind aus dem gleichen Werkstoff bestehende Laschen (11) mitangespritzt, mit denen die Abdeckung an dem Träger befestigt wird.

Die mit der Erfindung erzielten Vorteile bestehen insbesondere darin, daß durch die Wahl des Werkstoffs für die Abdeckung und die erfindungsgemäße Ausbildung der belasteten Abschnitte der Abdeckung eine Armierung entfallen kann und dadurch neben einer Gewichtsminderung die Fertigung der Abdeckung deutlich vereinfacht wird.

## Patentansprüche

1. Gassack-Aufprallschutzvorrichtung, die in das Lenkrad bzw. das Armaturenbrett von Kraftfahrzeugen integrierbar ist und aus dem den zusammengefalteten aufblähbaren Gassack sowie den mit diesem verbundenen Festtreibstoff-Gasgenerator aufnehmenden Träger und der über den Rand des Gassacks reichenden mit dem Träger verbundenen Abdeckung (1) aus elastischem Kunststoff besteht, deren Deckel genau definierte Sollbruchlinien (5) aufweist und deren an dem Träger befestigter umlaufender Rahmen (4) mit den durch die Sollbruchlinien gebildeten Deckelabschnitten (2, 3) scharnierartig verbunden ist, und die Abdeckung aus einem einteiligen Spritzgußformkörper aus thermoplastischem Elastomerem besteht, dadurch gekennzeichnet, daß von der Initialbruchstelle (6) ausgehend die Wanddicke der Abdeckung entlang der Sollbruchlinien kontinuierlich bis zu ihrem Auslauf im Bereich der scharnierartigen Verbindung (9, 10) der Deckelabschnitte mit dem Rahmen zunimmt und im Bereich der freien Ecken (7, 8) der Deckelabschnitte 0,90 bis 1,20 mm und an ihrem Auslauf im Bereich der scharnierartigen Verbindung der Deckelabschnitte mit dem Rahmen der Abdeckung 1,3 bis 2,3 mm beträgt.

2. Gassack-Aufprallschutzvorrichtung nach Anspruch 1, dadurch gekennzeichnet, daß die Sollbruchlinien (5) eine Initialbruchstelle (6) von 5 bis 30 mm Länge und einer Wanddicke von 0,30 bis 0,75 mm aufweisen.

3. Gassack-Aufprallschutzvorrichtung nach den Ansprüchen 1 und 2, dadurch gekennzeichnet, daß die Wanddicke der Deckelabschnitte (2, 3) 2,5 bis 6,0 mm beträgt.

4. Gassack-Aufprallschutzvorrichtung nach den Ansprüchen 1 bis 3, dadurch gekennzeichnet, daß die Deckelabschnitte (2, 3) im Bereich ihrer scharnierartigen Verbindung (9, 10) mit dem Rahmen (4) eine Zerreißfestigkeit von wenigstens 4500 N besitzen.

5. Gassack-Aufprallschutzvorrichtung nach den Ansprüchen 1 bis 4, dadurch gekennzeichnet, daß der Rahmen (4) der Abdeckung (1) eine Wanddicke von 3 bis 6 mm und eine Zerreißfestigkeit von wenigstens 1500 N besitzt.

6. Gassack-Aufprallschutzvorrichtung nach den Ansprüchen 1 bis 5, dadurch gekennzeichnet, daß am unteren Rand des Rahmens (4) der Abdeckung (1) Befestigungslaschen (11) aus dem gleichen Werkstoff wie die Abdeckung angespritzt sind.

7. Gassack-Aufprallschutzvorrichtung nach den Ansprüchen 1 bis 5, dadurch gekennzeichnet, daß in den Rahmen (4) der Abdeckung (1) Befestigungslaschenbleche eingespritzt sind.

8. Gassack-Aufprallschutzvorrichtung nach den Ansprüchen 1 bis 7, gekennzeichnet durch die Verwendung von thermoplastischem Elastomerem mit einer Härte von 55 Shore A bis 75 Shore D, einer Bruchspannung von größer 5,5 MPa, einer Bruchdehnung von größer 100 % und einer Temperaturbeständigkeit von -40 bis +85°C.

## Claims

1. An air bag crash protection device, which may be integrated in the steering wheel or dashboard of a motor vehicle and consists of the carrier accommodating the folded, inflatable air bag and the solid propellant gas generator connected therewith and of the covering (1) of resilient plastics material connected with the carrier and extending over the edge of the air bag, said covering (1) having a lid, which comprises precisely defined predetermined breaking lines (5), and a circumferential frame (4) fastened to the carrier and connected articulatedly with the lid sections (2, 3) formed by the predetermined breaking lines, and said covering consisting of a one-piece injection-moulded member of thermoplastic elastomer, characterized in that, starting from the initial breaking point (6), the wall thickness of the covering increases along the predetermined breaking lines continuously until it runs out in the area of the hinge-type connection (9, 10) of the lid sections with the frame and amounts in the area of the free corners (7, 8) of the lid sections to 0.9 to 1.2 mm and at its runout in the area of the hinge-type connection of the lid sections with the frame of the covering to 1.3 to 2.3 mm.

2. An air bag crash protection device according to claim 1, characterized in that the predetermined breaking lines (5) comprise an initial breaking point (6) from 5 to 30 mm long and a wall thickness of from 0.3 to 0.75 mm.

3. An air bag crash protection device according to either one of claims 1 and 2, characterized in that the wall thickness of the lid sections (2, 3) amounts to 2.5 to 6.0 mm.

4. An air bag crash protection device according to claims 1 to 3, characterized in that the lid sections (2, 3) have a tensile strength of at least 4500 N in the area of their hinge-type connection (9, 10) with the frame (4).

5. An air bag crash protection device according to claims 1 to 4, characterized in that the frame (4) of the covering (1) has a wall thickness of from 3 to 6 mm and a tensile strength of at least 1500 N.

6. An air bag crash protection device according to claims 1 to 5, characterized in that fastening brackets (11) of the same material as the covering are injection moulded onto the lower edge of the frame (4) of the covering (1).

7. An air bag crash protection device according to claims 1 to 5, characterized in that fastening bracket plates are injection moulded into the frame (4) of the covering (1).

8. An air bag crash protection device according to claims 1 to 7, characterized by the use of thermoplastic elastomers with a hardness of 55 Shore A to 75 Shore D, stress at break of greater than 5.5 MPa, stretch at break of greater than 100 % and thermal stability of from -40 to +85°C.

## Revendications

1. Dispositif de protection par coussin d'air en cas de collision, qui peut être intégré au volant de direction ou au tableau de bord de véhicules automobiles et qui est constitué du coussin d'air gonflable replié, ainsi que du support recevant le générateur de gaz à agent de gonflement solide communiquant avec le coussin d'air et du capot (1) en matière plastique élastique qui va jusqu'au bord du coussin d'air, qui est relié au support, dont le couvercle comporte des lignes (5) destinées à se rompre définies avec précision et dont le cadre (4), faisant tout le tour et fixé au support, est relié à charnière aux parties (2,3) du couvercle formées par les lignes destinées à se rompre, le capot étant une pièce moulée par injection d'un seul tenant en un élastomère thermoplastique, caractérisé en ce qu'à partir du point (6) destiné à se rompre initialement, l'épaisseur de la paroi du capot augmente, le long des lignes destinées à se rompre, continuellement jusqu'à son aboutissement dans la zone de la liaison (9,10) à charnière des parties du couvercle au cadre et est de 0,90 à 1,20 mm dans la zone des sommets (7,8) libres des parties du couvercle et de 1,3 à 2,3 mm à son aboutissement dans la zone de la liaison à charnière des parties du couvercle au cadre du capot.

2. Dispositif de protection par coussin d'air en cas de collision suivant la revendication 1, caractérisé en ce que les lignes (5) destinées à se rompre comportent un point (6) destiné à se rompre initialement de 5 à 30 mm de longueur et d'une épaisseur de paroi de 0,30 à 0,75 mm.

3. Dispositif de protection par coussin d'air en cas de collision suivant la revendication 1 ou 2, caractérisé en ce que l'épaisseur de la paroi des parties (2,3) du couvercle est comprise entre 2,5 et 6,0 mm.

4. Dispositif de protection par coussin d'air en cas de collision suivant l'une des revendications 1 à 3, caractérisé en ce que les parties (2,3) du couvercle possèdent, dans la zone de leur liaison (9,10) à charnière au cadre (4), une résistance à la déchirure d'au moins 4500 N.

5. Dispositif de protection par coussin d'air en cas de collision suivant l'une des revendications 1 à 4, caractérisé en ce que le cadre (4) du capot (1) a une épaisseur de paroi de 3 à 6 mm et possède une résistance à la déchirure d'au moins 1500 N.

6. Dispositif de protection par coussin d'air en cas de collision suivant l'une des revendications 1 à 5, caractérisé en ce qu'au bord inférieur du cadre (4) du capot (1), sont moulées par injection des pattes (11) de fixation en la même matière que le capot.

7. Dispositif de protection par coussin d'air en cas de collision suivant l'une des revendications 1 à 5, caractérisé en ce que dans le cadre (4) du capot (1), sont moulées par injection des tôles formant pattes de fixation.

8. Dispositif de protection par coussin d'air en cas de collision suivant l'une des revendications 1 à 7, caractérisé par l'utilisation d'un élastomère thermoplastique d'une dureté de 55 Shore A à 65 Shore D, d'une contrainte à la rupture supérieure à 5,5 MPa, et d'une résistance à l'effet de la température de -40 à +85°C.
